# EUROPÄISCHE PATENTSCHRIFT

(11) **EP 2 510 572 B1**
(45) Veröffentlichungstag und Bekanntmachung des Hinweises auf die Patenterteilung: **19.10.2016**
(21) Anmeldenummer: 10784323.7
(22) Anmeldetag: 06.12.2010
(51) Int. Cl.: H01M 8/0444, H01M 8/04089, G01N 21/67

(54) **VERFAHREN ZUM ÜBERWACHEN UND/ODER REGELN VON BRENNSTOFFZELLEN**
METHOD FOR MONITORING AND/OR REGULATING FUEL CELLS
PROCÉDÉ DE CONTRÔLE ET/OU DE RÉGULATION DE PILES À COMBUSTIBLE

(30) Priorität: 08.12.2009 DE 102009057130
(43) Veröffentlichungstag der Anmeldung: 17.10.2012
(73) Patentinhaber: Heinrich Heine Universität Düsseldorf, 40225 Düsseldorf (DE)
(72) Erfinder: BETTERMANN, Hans, 41469 Neuss (DE); FISCHER, Peter, 40233 Düsseldorf (DE); REICHELT, Arno Gödecke, 40237 Düsseldorf (DE); BUDER, Irmgard, 47057 Duisburg (DE); PEINECKE, Volker, 45472 Mülheim-Ruhr (DE)
(74) Vertreter: Michalski Hüttermann & Partner Patentanwälte mbB
(86) Internationale Anmeldenummer: PCT/EP2010/068941
(87) Internationale Veröffentlichungsnummer: WO 2011/069948

(56) Entgegenhaltungen:
- EP-A1- 0 940 670
- WO-A1-2007/098586
- WO-A2-98/18001
- DE-T2- 60 223 961
- DE-T5-112006 002 060
- US-A- 4 801 209
- US-A- 5 168 323
- US-A- 5 570 179
- US-A1- 2006 147 765
- US-A1- 2009 272 896

## Beschreibung

Die Erfindung betrifft ein Verfahren zum Überwachen und/oder Regeln von Brennstoffzellen, umfassend das Ermitteln der Zusammensetzung der Betriebsgase von Brennstoffzellen.

Heutzutage stehen hocheffiziente Energieumwandlungssysteme auf Basis von Brennstoffzellen im Fokus weltweiter Forschung- und Entwicklungstätigkeiten, da sie im Vergleich zu Systemen, die auf konventionellen Energieträgern basieren, hinsichtlich Wirkungsgrad und Schadstoffemission deutliche Vorteile bieten. Neben dem Bau stationärer Kraftwerke liegt ihr größtes Potential im Automobilbau.

Das Wirkungsprinzip von PEM (Polymer-Elektrolyte-Membran) - Brennstoffzellen beruht auf einer kontrollierten elektrochemischen Reaktion von Wasserstoff und Sauerstoff unter Nutzung der abgegebenen elektrischen Energie. Diese Brennstoffzellen weisen einen Anodenraum und einen Kathodenraum auf, die durch eine Elektrolytmembran getrennt sind. Auf der Anodenseite der Membran werden Wasserstoffmoleküle katalytisch gespalten und wandern als Protonen in den Kathodenraum, wo sie mit Sauerstoffionen Wasser bilden. Dadurch erzeugen Brennstoffzellen elektrochemische Energie. Als Sauerstofflieferant auf der Kathodenseite kann vorzugsweise auch Luft dienen, was einen besonders ökonomischen Betrieb gestattet.

Ein Problem bei luftbetriebenen PEM-Brennstoffzellen entsteht jedoch beispielsweise bei Alterung und der damit einhergehenden Gasdurchlässigkeit der Membran durch erhöhte Permeation von Luft-Stickstoff in den Anodenraum. Ein kritischer Zustand tritt ein, wenn sich in der Membran Mikrorisse, wie etwa makroskopische Risse, bilden. Dies ist durch die Anreicherung von Stickstoff auf der Anodenseite erkennbar. Im Falle eines makroskopischen Risses der Membran kommt es durch direkte katalytische Verbrennung von Wasserstoff an der Leckstelle zu einer Überhitzung, die unmittelbar zur Zerstörung der Membran und damit zum Funktionsausfall der Brennstoffzelle führt.

Darüber hinaus ist ein weiterer Störfalltyp möglich, der durch anomale Wasserdampfkonzentrationen des Anodengases auftreten kann. Der Ionentransport durch die PEM ist nur bei ausreichender Befeuchtung möglich. Austrocknung infolge zu geringer Wasserdampfkonzentration des Speisegases führt unter Last zu einer lokalen Stromdichteerhöhung in den noch ausreichend befeuchteten Membranarealen, und kann damit durch Überlastung ebenfalls eine Schädigung bis hin zum Ausfall der Brennstoffzelle bewirken.

Es ist daher von Bedeutung, bei dem Betrieb von luftbetriebenen PEM-Brennstoffzellen geringe Mengen an Stickstoff im Anodenraum neben unterschiedlicher Wasserdampfkonzentrationen zuverlässig nachweisen zu können. Auf diese Weise kann zum Einen die momentane Durchlässigkeit der Membran überwacht werden, was Rückschlüsse auf Alterungsprozesse der Membran und damit einhergehende Undichtigkeiten erlaubt. Zum Anderen ist es möglich, die momentane Befeuchtung zu überwachen. Die Brennstoffzellenprozesse sind so zuverlässig kontrollierbar und die Lebensdauer einer Brennstoffzelle wird erhöht, was die erforderlichen Wartungsintervalle vergrößert.

Aus DE 602 23 961 T2 ist ein Verfahren zur Messung von Stickstoff in einem Gas bekannt, bei dem Spurenmengen von Stickstoff in Krypton- oder Xenongas mit einer Gasentladungsröhre bei einem Halbleiterfertigungsverfahren gemessen werden. Die Intensität des durch die Entladung in der Gasentladungsröhre erzeugten Lichts wird in einem Spektrophotometer gemessen. Das Basisgas ist dabei auf Edelgase wie Krypton oder Xenon beschränkt.

Aus US 5,570,179 ist ein Sensor zur spektroskopischen Analyse von Gasmischungen bekannt. Dieser Sensor arbeitet mit einer stillen elektrischen Entladung. Diese stille elektrische Entladung könnte bei einem typischen Gasdruck von etwa einem Bar nicht aufrechterhalten werden, wodurch das System für einen Einsatz in Brennstoffzellensystemen nicht geeignet wäre. In US 5,168,323 wird eine Vorrichtung zum Ermitteln von Verunreinigungen in Gasen beschrieben. Diese Vorrichtung findet insbesondere Anwendung bei der Ermittlung von Verunreinigungen in Edelgasen wie beispielsweise Helium. Für die Bestimmung von Stickstoffkonzentrationen in einer Atmosphäre vergleichbar zu der von Brennstoffzellen findet sich hier kein Hinweis. Auch wird hier nicht die Möglichkeit einer direkten Bestimmung der Wasserdampfkonzentration in einem Gasgemisch erwähnt.

Aus DE 11 2006 001 778 T5 und DE 11 2006 002 060 T5 sind Verfahren zur Feststellung einer Brenngasleckage in einem Brennstoffzellensystem bekannt, die auf der Schätzung beziehungsweise Beurteilung der Stickstoffkonzentration basieren. Beide Verfahren eignen sich nicht für die online-Analyse von Brennstoffzellen im Betrieb und nutzen keine spektroskopischen Nachweismethoden.

Aus dem Dokument US 2006/147765 A1 ist ein Verfahren zum Betreiben einer Brennstoffzelle bekannt, durch welches insbesondere die Effektivität der Brennstoffzelle verbessert werden soll. Um dies zu realisieren, ist es dabei unter anderem vorgesehen, dass die Konzentration von Sauerstoff in dem Anodenabgasstrom ermittelt wird. Um die Konzentration des Sauerstoffs zu ermitteln, wird in diesem Dokument vorgeschlagen, eine Nernst-Zelle zu verwenden und den Spannungsunterschied des Anodenabgasstroms mit Bezug auf ein Referenzgas zu messen. Als alternative Sauerstoff-Sensoren werden ferner vorgeschlagen Wechselstrom-Impedanz-Spektroskopie, galvanostatische Stromunterbrechung und Gaschromatographie.

Das Dokument US 2009/0272896 A1 beschreibt ein System und ein Verfahren zum Detektieren chemischer Substanzen in einem Probengas. Das hier beschriebene Verfahren umfasst das Einstellen eines elektrischen Felds, um Ionen des Probengases in einen chemischen Detektor, wie beispielsweise ein Ionen-Mobilitäts-Spektrometer, zu überführen. Dazu ist es ferner vorgesehen, dass das zu analysierende Gasgemisch in einer ersten Kammer vorliegt, in welche erste Kammer durch einen in einer zweiten Kammer erzeugten Entladungsbogen erzeugte Ultraviolett-Strahlung geleitet wird, um zu detektierende Ionen des Gasgemischs zu erzeugen.

Aufgabe der Erfindung ist es, ein Verfahren zum Überwachen und/oder Regeln von Brennstoffzellen zu schaffen, womit zuverlässig und nachweisstark Gaskomponenten, wie etwa Stickstoff oder Wasserdampf, online auch in einem Brennstoffzellensystem ermittelbar sind.

Diese Aufgabe wird durch ein Verfahren mit den Merkmalen des Anspruchs 1 gelöst. Ferner wird die Aufgabe durch ein Brennstoffzellensystem gemäß Anspruch 8 gelöst. Bevorzugte Ausgestaltungen des erfindungsgemäßen Verfahrens und des erfindungsgemäßen Brennstoffzellensystems sind in den Unteransprüchen angegeben.

Gegenstand der vorliegenden Erfindung ist ein Verfahren zum Überwachen und/oder Regeln von Brennstoffzellen, umfassend das Ermitteln der Zusammensetzung der Betriebsgase von Brennstoffzellen, umfassend die Schritte: Einleiten eines zu analysierenden Gasgemisches in eine Messzelle; Erzeugen eines Lichtbogens in der Messzelle; Aufnehmen der durch den Lichtbogen emittierten Strahlung; optisches Filtern der emittierten Strahlung und/oder spektrales Zerlegen der emittierten Strahlung; Umwandeln der emittierten Strahlung in ein elektrisches Signal; Auswerten des elektrischen Signals.

Die Entladung in Form des Lichtbogens bewirkt, dass die zu analysierenden Gase ionisiert und die resultierende Lichtemissionen aufgenommen werden. Die Lichtemission der Ionen ist dann als spezifischer Nachweis nutzbar. Die Erzeugung von Ionen ist hier sinnvoll, da nicht alle neutralen Moleküle eine verwertbare Linienemission zeigen.

Durch das erfindungsgemäße Verfahren wird es möglich, ein Gasgemisch zuverlässig und nachweisstark zu analysieren. Beispielsweise können bereits geringe Mengen an Stickstoff im Anodenabgasstrom in Gegenwart unterschiedlicher Wasserdampfkonzentrationen während des Betriebs einer Brennstoffzelle nachgewiesen und so die Durchlässigkeit der Membran überwacht werden. Leckagen im System können so schnell und sicher ermittelt werden. Ebenso ist so eine direkte Regelung oder Steuerung der Brennstoffzellenvorgänge möglich.

Das erfindungsgemäße Verfahren ist dabei besonders kostengünstig durchzuführen, was sowohl durch den einfachen Aufbau der benötigten Messzelle als auch durch deren geringen Energieverbrauch gewährleistet ist.

Es wird ferner eine effiziente und sichere Überwachung und/oder Regelung einer oder mehrere Brennstoffzellen möglich. Dabei kann vorgesehen sein, dass die emittierte Strahlung von wenigstens zwei Messzellen abgenommen wird, wobei das optische Filtern der emittierten Strahlung und/oder das spektrale Zerlegen der emittierten Strahlung für jede der Messzellen einzeln, oder aber parallel durchgeführt wird. Auf diese Weise ist auch eine sichere Überwachung und/oder Reglung von Brennstoffzellenstacks möglich, wobei dann nur eine Analyseeinheit notwendig ist.

In einer vorteilhaften Ausgestaltung des erfindungsgemäßen Verfahrens wird der Lichtbogen durch das Anlegen einer Wechselspannung an Elektroden erzeugt. Die Wechselspannung an den Elektroden muss dabei ausreichend hoch und auf den Elektrodenabstand abgestimmt sein, um die erforderliche Stromdichte zu erreichen. Besonders vorteilhaft liegt die Wechselspannung bei einer Frequenz zwischen 20 kHz und 70 kHz. Dadurch ist es möglich, auch Moleküle wie Wasser, Stickstoff oder Wasserstoff zu ionisieren und so mit spektroskopischen Methoden nachzuweisen. Das erfindungsgemäße Verfahren ist daher vorzugsweise in der Atmosphäre einer Brennstoffzelle einsetzbar. Durch die genauere Wahl der Entladungsbedingungen können optimale Eigenschaften der Entladung und damit für die jeweilige analytische Aufgabe erreicht werden.

Die Verwendung einer Wechselspannung in dem genannten Frequenzbereich bietet darüber hinaus weitere Vorteile: Zum Einen wird ein einseitiger Elektrodenabbrand vermieden, der bei einem Gleichstrombogen auftreten könnte und zur geometrischen Verlagerung der Brennstrecke und damit der Veränderung der optischen Eigenschaften des Systems führen würde. Zum Anderen sind die erforderlichen Spannungsquellen kommerziell einfach und preiswert erhältlich. Es bietet sich hier besonders vorteilhaft die Verwendung von Inverterschaltungen an, die beispielsweise zum Betrieb von Kaltkathodenleuchtröhren (CCFL - Cold Cathode Flourescent Lamp) Verwendung finden. Darüber hinaus werden durch die Verwendung des genannten Frequenzbereichs Interferenzen mit Radio- und Mobilfunkanlagen vermieden. Da diese Inverterschaltungen bereits eine galvanische Trennung gewährleisten, bieten sie darüber hinaus den Vorteil, dass es möglich ist, die im Folgenden beschriebene Messzelle ohne weitere Isolationsmaßnahmen direkt in einen Brennstoffzellenstack zu integrieren.

In einer weiteren vorteilhaften Ausgestaltung wird an die Elektroden eine Spannung in einem Bereich zwischen 0,5 kV und 5 kV angelegt, so dass sich Stromstärken in einem Bereich zwischen 200 µA bis 6 mA einstellen. Dadurch wird eine für die Bogenentladung und damit für die Funktion der Messzelle notwendige Stromdichte erzeugt Durch diese Entladungsbedingungen können optimale Eigenschaften für die Entladung erreicht werden.

In einer weiteren vorteilhaften Ausgestaltung wird die emittierte Strahlung mit einem Lichtleiter abgenommen. Durch die Verwendung eines Lichtleiters ist es möglich, die Messzelle mechanisch in einen Brennstoffzellenstack beziehungsweise in einen Brennstoffzellenstapel oder in das Gehäuse des Brennstoffzellenstapels zu integrieren, wohingegen die weiteren Bauteile der Analytik außerhalb der Brennstoffzelle angeordnet werden können.

Die Erfindung betrifft ferner ein Brennstoffzellensystem, aufweisend eine Messzelle zur Analyse der Zusammensetzung der Betriebsgase von Brennstoffzellen, umfassend ein Gehäuse, das einen Gaseintritt und einen Gasaustritt aufweist, und eine Entladungskammer, die mit dem Gaseintritt und Gasaustritt verbunden ist, wobei die Entladungskammer, von dem Gehäuse zumindest teilweise umschlossen ist und in der eine Elektrode und eine Gegenelektrode mit einer Entladungsstrecke angeordnet sind, wobei die Elektroden zur Ausbildung eines Lichtbogens ausgebildet sind und mindestens ein Mittel vorgesehen ist, um die emittierte Strahlung abzunehmen.

Eine derartige Messzelle ist besonders einfach und kostengünstig herzustellen. Darüber hinaus können die Abmessungen einer derartigen Messzelle sehr klein gehalten werden, so dass sich erfindungsgemäße Messzellen problemlos in einen Brennstoffzellenstack integrieren lassen.

In einer vorteilhaften Ausgestaltung der vorliegenden Erfindung sind die Elektrode und die Gegenelektrode stiftförmig mit verdickten Enden ausgebildet. Dadurch sind sie langlebig, da so eine lokale Überhitzung der Entladungsstelle vermieden wird, die zu einem raschen Elektrodenabbrand führen würde.

In einer weiteren vorteilhaften Ausgestaltung ist eine Elektrode als Ringelektrode ausgebildet. Dadurch sind Konstruktionen möglich, die einen schnelleren Gasaustausch in der Entladungszone ermöglichen und bei denen die bei der Entladung freiwerdende Wärme besser abgeführt werden kann. Durch den schnelleren Gasaustausch gestattet diese Ausführung eine schnelle Detektion und somit eine effiziente Regelung der Brennstoffzelle.

In einer weiteren vorteilhaften Ausgestaltung ist das Gehäuse thermostatisierbar ausgebildet. Dadurch kann es auf die Temperatur der Brennstoffzelle eingestellt werden, wodurch ein Kondensieren von Wasser innerhalb der Messzelle wirksam verhindert wird. Dies ist insbesondere erforderlich, wenn die Messzelle außerhalb des Brennstoffzellengehäuses oder des Stacks angeordnet wird.

In einer weiteren vorteilhaften Ausgestaltung der Erfindung ist das Mittel, um die emittierte Strahlung abzunehmen, als Lichtleiter ausgebildet. Durch das Vorsehen eines Lichtleiters ist es möglich, die Messzelle direkt in das Gehäuse einer Brennstoffzelle beziehungsweise eines Brennstoffzellenstapels (eines sog. Brennstoffzellenstacks) zu integrieren, wohingegen die weiteren Bauteile der Analytik außerhalb der Brennstoffzelle angeordnet werden können. Diese Maßnahme bietet den Vorteil, dass keine zusätzliche Thermostatisierung zur Vermeidung der Kondensation von Wasser in der Messzelle erforderlich wird. Darüber hinaus kann so eine einzige optische Analyseeinheit für eine Vielzahl von Messzellen verwendet werden. Dies ist insbesondere dann von Vorteil, wenn die Brennstoffzellen als Stacks angeordnet oder mehrere Stacks zu einem größeren System zusammengefasst werden. Der vorgeschlagene Aufbau weist den Vorteil auf, dass er robust und stabil gegenüber äußeren Einflüssen ist. Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken.

Es zeigen:
Fig. 1 den Aufbau einer Ausführungsform einer erfindungsgemäßen Messzelle,
Fig. 2 den Aufbau einer alternativen Ausführungsform einer Messzelle,
Fig. 3 ein typisches Entladungsspektrum von reinem Wasserstoff,
Fig. 4 ein typisches Entladungsspektrum eines Wasserstoff/Stickstoff-Gemisches in einem Mischungsverhältnis von 1:1,
Fig. 5 ein typisches Entladungsspektrum eines Wasserstoff/Stickstoff-Gemisches in einem Mischungsverhältnis von 5:1,
Fig. 6 ein typisches Entladungsspektrum eines wasserdampfgesättigten Wasserstoff/Stickstoff-Gemisches in einem Mischungsverhältnis von 5:1 sowie ein Entladungsspektrum von wasserdampfgesättigtem reinem Wasserstoff,
Fig. 7 eine vergrößerte Ansicht des Spektrums von Fig. 5.

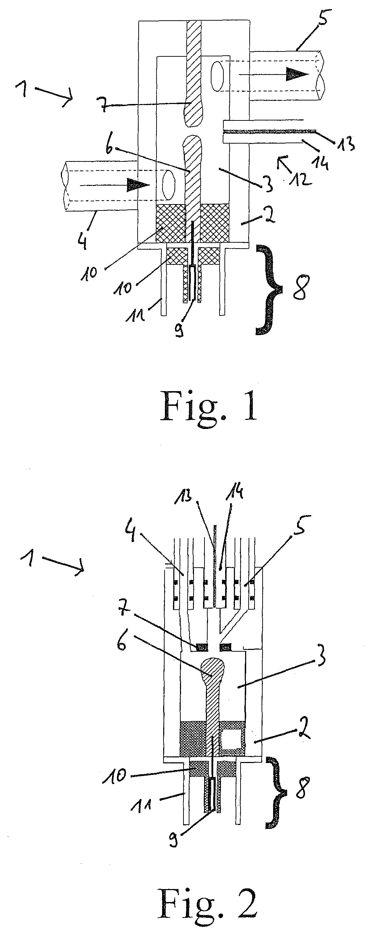

In Figur 1 ist eine erfindungsgemäße Messzelle 1 gezeigt, die für ein erfindungsgemäßes Verfahren zum Überwachen und/oder Regeln von Brennstoffzellen ausgebildet ist. Vorzugsweise ist die Messzelle 1 als Entladungszelle ausgebildet und am Ende des Anodengaskanals einer Brennstoffzelle angeordnet. Die Messzelle 1 kann direkt in den Anodengaskanal eingeschleift oder über einen Bypass mit diesem verbunden sein.

Gemäß Figur 1 umfasst die Messzelle 1 ein gasdichtes Gehäuse 2, dessen Inneres eine Entladungskammer 3 bildet. Die Entladungskammer 3 ist so zumindest teilweise von dem Gehäuse 2 umschlossen. Das Gehäuse 2 weist ferner einen Gaseintritt 4 und einen Gasaustritt 5 auf, durch welche das zu vermessende Gas in die Messzelle 1 hinein- beziehungsweise aus dieser herausleitbar ist. Bezüglich der Stutzen für den Gaseintritt 4 und den Gasaustritt 5 ist ein Steckersystem vorteilhaft, wobei vorgesehen sein kann dass dieses gegenüber der Umgebung gasdicht abschließt. Dies garantiert im Bedarfsfalle eine schnelle Austauschbarkeit der Messzelle 1. Diese ist besonders vorteilhaft, da so im Falle von Störungen, etwa durch Elektrodenabbrand oder eingedrungenes flüssiges Wasser rasch Ersatz gewährleistet werden kann.

In dem Innenraum der Entladungskammer 3 sind die Elektrode 6 und die Gegenelektrode 7 so angeordnet, dass zwischen ihnen eine Bogenentladung stattfinden kann. Die Elektrodenstrecke, also die Größe des Abstandes zwischen den Elektroden 6,7, kann dabei in einer vorteilhaften Ausführung der Messzelle variabel einstellbar sein. So ist die Wahl optimaler Entladungsbedingungen für spezielle Gasnachweise möglich. Diese Entladungsstrecke wird jedoch typischerweise durch einen Spalt von einigen 100 µm zwischen der Elektrode 6 und einer Gegenelektrode 7, die zur Aufrechterhaltung eines Lichtbogens geeignet sind, gebildet.

Vorzugsweise ist das Gehäuse 2 ganz oder teilweise aus Metall ausgebildet. Dadurch wird eine Thermostatisierung der Messzelle 1 auf die Temperatur der Brennstoffzelle problemlos möglich. Dies ist für den Betrieb der Kombination von Brennstoffzelle und Messzelle 1 von großer Wichtigkeit, da so die Kondensation von Wasser in der Entladungskammer 3 wirksam verhindert werden kann. So wird ausgeschlossen, dass kondensiertes Wasser zu Kriechströmen oder Überschlägen in der Messzelle 1 führt, was die Messergebnisse verfälschen oder die Zelle sogar beschädigen kann.

Die Außenabmessungen des Gehäuses 2 sind vorteilhafterweise auf wenige Zentimeter beschränkt. Der Radius des vorzugsweise zylindrischen Gehäuses 2 kann zwischen 1 und 1,5 cm liegen und die Länge des Gehäuses kann in einem Bereich von 2 bis 3 cm liegen. Dadurch ist die Messzelle 1 sehr kompakt und problemlos für den Einsatz in Brennstoffzellensystemen geeignet.

Zur Erzeugung des Lichtbogens kann den Elektroden 6, 7 eine Wechselspannung zugeführt werden. Hierzu weist die Messzelle 1 vorzugsweise an ihrer Elektrode 6 einen Anschluss 8 auf, der als lösbare elektrische Verbindung ausgebildet sein kann. Dies kann beispielsweise ein handelsüblicher BNC-Anschluss sein.

Bei Verwendung eines solchen Stecksystems ist die Elektrode 6 mit der inneren Kontaktfeder 9 leitend verbunden. Die Elektrode 6 ist von dem Gehäuse 2 durch einen gasdichten elektrischen Isolator 10 getrennt, wobei in einer vorteilhaften Ausführung der Außenkontakt 11 mit dem Gehäuse 2 in elektrischer Verbindung steht.

Die Wechselspannung wird vorzugsweise durch eine Inverterschaltung erzeugt, die eine Gleichspannung in die benötigte Wechselspannung umformt. Derartige Inverterschaltungen werden beispielsweise für den Betrieb von Kaltkathodenleuchtröhren (CCFL), wie sie unter anderem für die Hintergrundbeleuchtung von TFT-Monitoren bekannt sind, verwendet. Vorteilhafterweise wird so je nach Schaltungsdimensionierung eine Wechselspannung in einem Bereich von 20 bis 70 kHz verwendet. Ferner liegt die abgegebene Spannung vorzugsweise im Bereich weniger kV, insbesondere liegt die abgegebene Spannung zwischen 0,5 und 5 kV, so dass sich beim Betrieb der Messzelle Stromstärken von 200 µA bis 6 mA einstellen. Diese Angaben stellen technische Randwerte dar, deren Bereich zur Anpassung des Verfahrens an verschiedene Zellgeometrien oder andere Faktoren ausgenutzt werden kann. Durch die Wahl der Werte innerhalb der vorgenannten Grenzen wird die notwendige Stromdichte erreicht, um die für die Funktion der Meszelle erforderliche Bogenentladung zu gewährleisten.

Das Anodengas einer PEM-Brennstoffzelle bildet eine stark reduzierende Atmosphäre, da vorwiegend Wasserstoff, Wasser, geringe Mengen an Stickstoff und Spurengasen vorhanden sind. Um unter diesen Bedingungen hinreichend beständig zu sein, können die Elektroden 6,7 daher beispielsweise aus Gold oder vergoldeten Metallen bestehen.

In einer vorteilhaften Ausführung kann seitlich der Elektrodenstrecke zwischen den Elektroden 6,7 ein Lichtleiter 12 angeordnet sein, der mit einem standardisierten Stecker 14 versehen ist, welcher ebenfalls gegenüber der Umgebung gasdicht abdichtbar ist. Vorzugsweise besteht der optische Kern 13 des Lichtleiters 12 aus Glasfasern oder optischen Fasern aus organischen Polymeren. Der Lichtleiter 12 dient dazu das emittierte Licht des zu vermessenden Gasgemisches abzunehmen und zu einem Detektionssystem weiterzuleiten. Der Vorteil der Verwendung eines Lichtleiters 12 ist insbesondere, dass nur die Messzelle 1 als solche innerhalb des Brennstoffzellensystems oder des Stacks angeordnet sein muß und eine räumliche Trennung zwischen dem optischen Detektionssystem und der Gasentladungszelle beziehungsweise Messzelle 1 möglich wird. Somit besteht die Option, eine Vielzahl von Lichtleitern, die von verschiedenen Messzellen 1 ausgehen, zu nur einer einzigen optischen Analyseeinheit wie etwa einem optischen Dispersions- und Detektionssystem zu führen. Die Signale der einzelnen Messzellen können entweder optisch umgeschaltet oder parallel registriert werden.

Wird an den Elektroden eine Spannung angelegt, wie oben beschrieben, wird zwischen den Elektroden ein Lichtbogen erzeugt, der die in dem zu untersuchenden Gasgemisch enthaltenen Gase zu spezifischen Emissionen anregt. Durch den Lichtleiter 12 wird die emittierte Strahlung aufgenommen und vorzugsweise zu einer optischen Dispersionseinheit weitergeleitet. In dieser wird die emittierte Strahlung spektral zerlegt. Die spektrale Zerlegung kann über Transmission- oder Reflexionsgitter, optische Foliengitter, oder Prismen oder Prismenkombinationen aus Polymermaterialien oder unterschiedlichen Glassorten erfolgen. Je nach verwendetem Detektor ist es dabei möglich, die Dispersionseinheit als Spektrometer, d.h. mit beweglichem Dispersionselement zur zeitlichen Abrasterung des Spektrums oder als Spektrograph, d.h. mit simultaner Abbildung und Weiterverarbeitung des gesamten Spektrums, zu betreiben. Darüber hinaus oder alternativ dazu ist es möglich, die nicht zu dem gewünschten Spektralbereich gehörigen Wellenlängen durch den Einsatz optischer Filter vor oder hinter der Dispersionseinheit auszublenden, also die emittierte Strahlung optisch zu filtern. Hierzu können Farbfilter, Kantenfilter, Interferenzfilter, Bandpassfilter oder Kombinationen aus diesen Verwendung finden. Im Weiteren muss die Strahlung in ein elektrisches Signal umgewandelt werden, um dieses dann auszuwerten. Als Detektor, der die Umwandlung in ein elektrisches Signal vornimmt, können hier im ersten Falle beispielsweise Photozellen, Photomultiplier, Photodioden, im zweiten CMOS- oder CCD-Detektoren dienen. Die Auswertung der elektrischen Signale kann mit dem Fachmann bekannten Methoden durchgeführt werden, beispielsweise als Gasspektren, wie im Folgenden gezeigt wird.

Bei Anlagen, die nur zur Messung eines einzelnen Spurengases ausgelegt sind, kann die Dispersionseinheit verzichtbar sein und durch einen geeigneten optischen Bandpassfilter ersetzt werden, der vorteilhafterweise mit einer Photozelle oder Photodiode als Detektor gekoppelt wird.

Bei dem erfindungsgemäßen Verfahren ist es möglich, die Regelung beziehungsweise Steuerung der Brennstoffzellenprozesse direkt online mit der erfindungsgemäßen Messzelle zu realisieren. So können Brennstoffzellenprozesse beispielsweise direkt an der Zelle selbst überwacht und gegebenenfalls Betriebsparameter umgehend geregelt beziehungsweise neu eingestellt werden. Darüber hinaus kann die Messzelle direkt mit einem Alarm verbunden werden. Auf diese Weise kann bei Erreichen eines kritischen Zustands ein Warnsignal abgegeben oder die Brennstoffzellenprozesse können erforderlichenfalls gestoppt werden.

Insbesondere bei Brennstoffzellenstacks ist es dabei von Vorteil, wenn für jede Brennstoffzelle eine Messzelle 1 vorgesehen ist. Um jedoch die von der Messzelle 1 ausgehende emittierte Strahlung in nur einer Analyseeinheit untersuchen zu können, ist es von Vorteil, wenn die Lichtleiter 12 vor der Analyseeinheit zusammengeführt werden. Dabei kann, je nach gewünschter Auswertung, vorgesehen sein, dass das optisches Filtern der emittierten Strahlung und/oder das spektrales Zerlegen der emittierten Strahlung für jede der Messzellen 1 einzeln, oder aber parallel durchgeführt wird. Auf diese Weise ist auch eine sichere Überwachung und/oder Reglung von Brennstoffzellenstacks möglich, wobei dann nur eine Analyseeinheit notwendig ist.

Die Messzelle liegt in einer vorteilhaften Ausführung im Ausgang des Anodenabgasstromes oder in einem Bypass desselben, kann jedoch auch an einer beliebigen anderen Position in dem Anodengasstrom der Brennstoffzelle oder in einem sonstigen zu analysierenden Gasstrom untergebracht sein.

Um das elektrische Streufeld abzuschirmen, wird die Wechselspannung der Messzelle vorzugsweise über eine Koaxialleitung zugeführt. Das Gehäuse 2 kann dann bezüglich der zugeführten Wechselspannung auf Massepotential bzw. das Potential der Anode der zu vermessenden Brennstoffzelle oder des Stacks gelegt werden. Dadurch wird darüber hinaus verhindert, dass im Falle eines Lecks im Brennstoffzellensystem austretender Wasserstoff durch Überschläge zwischen dem Messsystem und anderen elektrisch leitenden Teilen gezündet werden kann. Ferner können in einer vorteilhaften Ausführung in dem Gaseintritt 4 beziehungsweise den Gasaustritt 5 der Messzelle 1 jeweils wärmeleitende Diaphragmen vorgesehen werden, um im Falle eines Lufteinbruchs in das Anodengassystem eine Entzündung des entstehenden Knallgasgemisches sicher zu verhindern. Als wärmeleitende Diaphragmen können insbesondere Kupfersiebe oder Bronzesinterfritten Verwendung finden.

In Figur 2 ist eine weitere Ausführungsform einer erfindungsgemäßen Messzelle gezeigt. Der Aufbau ähnelt dem in Figur 1. Auch gemäß Figur 2 weist die Messzelle einen Gaseintritt 4 und einen Gasaustritt 5 auf. Durch diese ist das zu vermessende Gas in die Messzelle 1 einbeziehungsweise ausleitbar. Gemäß Figur 2 weist die Messzelle eine Elektrode 6 auf, die wie die Elektrode in Figur 1 gestaltet sein kann, wohingegen vorgesehen ist, dass die Gegenelektrode 7 als Ringelektrode ausgestaltet ist. Als solche kann sie als ein Teil des Gehäuses 2 ausgebildet sein.

Darüber hinaus weist auch die Ausführungsform der erfindungsgemäßen Messzelle nach Figur 2 einen Anschluss 8 insbesondere einen Steckanschluss wie beispielsweise einen BNC-Anschluss auf. Dadurch kann an die Elektroden eine Spannung, wie in Bezug auf Figur 1 erklärt, angelegt werden, um so eine Bogenentladung zu erzeugen. Um die so erzeugte Strahlung zu dem Dispersions- und Detektionssystem also etwa einem Spektrographen weiterzuleiten, ist der Lichtleiter 12 vorgesehen. Dieser kann jedoch gemäß Figur 2 wie auch die Elektrode 6 in der geometrischen Achse der Ringelektrode angeordnet sein. Dadurch ist es in einer vorteilhaften Anwendung der Messzelle möglich, den Eingang des Lichtleiters 12 besser vor Verunreinigungen zu schützen. Verunreinigungen können durch abgesputtertes Materials der Elektroden entstehen. Der Gaseintritt 5 ist so zum Lichtleiter angeordnet, dass durch die Strömungsrichtung des Gases die Verunreinigungen vom Lichtleiter ferngehalten werden. Durch diesen Aufbau wird ferner im Gegensatz zum Vorgenannten ein schnellerer Gasdurchsatz in der Entladungszone ermöglicht und dadurch bewirkt, dass die Brennstoffzellen schneller und damit effizienter regelbar sind.

Wird das erfindungsgemäße Verfahren durchgeführt, ist somit die Gaszusammensetzung im Anodenraum einer Brennstoffzelle untersuchbar. Typische entstehende Spektren sind in den folgenden Figuren gezeigt.

Die spektrale Emission von molekularem Stickstoff zeigt dabei im nahen Ultraviolettbereich ein charakteristisches Bandenmuster, das sich eindeutig von der in diesem Spektralbereich schwachen kontinuierlichen Emission des molekularen Wasserstoffs unterscheidet. Werden die in der Entladungskammer 3 vorhandenen Moleküle elektrisch in einem Lichtbogen angeregt, lässt sich beispielsweise molekularer Stickstoff anhand der entstehenden Emissionsspektren in dem Gasgemisch bis zu einer hohen Verdünnung nachweisen.

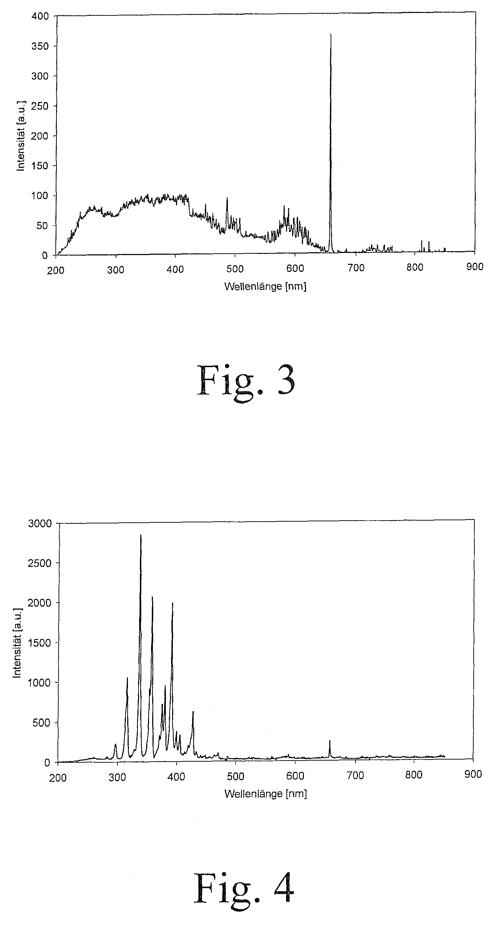

Figur 3 zeigt ein typisches Spektrum einer Bogenentladung in einer reinen Wasserstoffatmosphäre. Das Wasserstoffspektrum besteht in dem Spektralbereich von 200 bis 650 nm unter den gewählten Bedingungen (Temperatur 298 K, Druck etwa 1000 hPa, Flußgeschwindigkeit 60 Normmilliliter pro Minute) der elektrischen Entladung nur aus breiten Übergängen mit einer niedrigen Intensität. Lediglich die scharfe Linie bei 656,8 nm (die sog. H_{α} - Linie) sticht im Spektrum des Wasserstoffs hervor. In einem derartigen Spektrum sind die Spektrallinien von Stickstoff gut zu erkennen, wie dies in Figur 4 gezeigt ist.

Figur 4 zeigt ein Entladungsspektrum eines 1:1-Gemisches aus Wasserstoff und Stickstoff, das unter gleichen Bedingungen aufgenommen worden ist wie das in Figur 3 gezeigte. Hier sind insbesondere in dem Spektralbereich von ungefähr 300 bis 450 nm die Banden der Stickstoffentladung zu erkennen, die eine hohe Intensität aufweisen. Dies ist insbesondere ersichtlich aus dem Verhältnis der Intensität der Wasserstofflinie bei 656,8 nm im Vergleich zu den Stickstoffbanden.

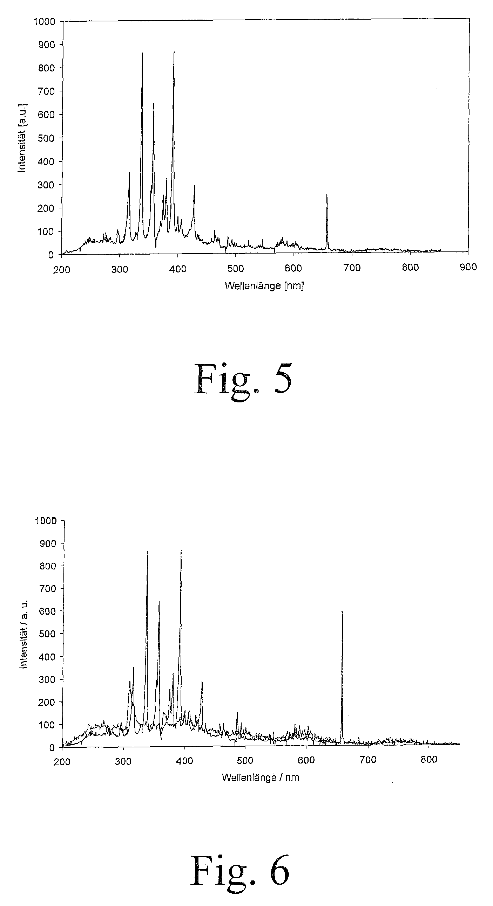

Wie in Figur 5 gezeigt ist, sind bei einer Wasserstoff-Stickstoff-Atmosphäre mit einem Mischungsverhältnis von 5:1 die Banden des Stickstoffs gegenüber den Untergrundsignalen des Wasserstoffs deutlich erkennbar. Aus Fig. 5 wird ersichtlich, dass Stickstoff erfindungsgemäß selbst bei einem deutlichen Überschuss von Wasserstoff noch problemlos zu detektieren ist. Eine Erfassungsgrenze für Stickstoff von unter einem Volumenprozent ist dabei erreichbar.

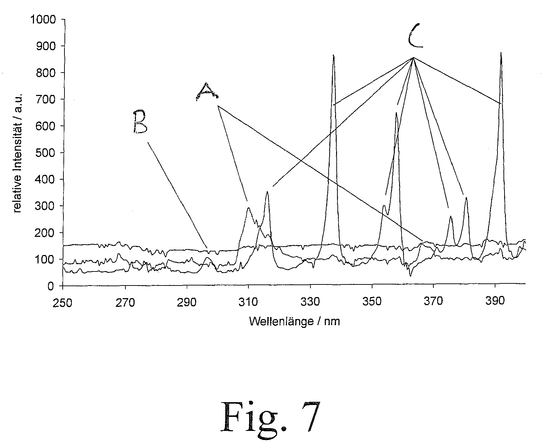

Neben dem eindeutigen Nachweis von Stickstoff in Gegenwart auch eines großen Überschusses an Wasserstoff ist es ferner wichtig, dass auch die Gegenwart von Wasserdampf den Nachweis von Stickstoff nicht stört, sondern dieser neben oder unabhängig von jenem mit der beschriebenen Methode ebenfalls quantifizierbar ist. Wasser ist in der Polymermembran stets vorhanden bzw. muß der Brennstoffzelle durch externe Befeuchtung der Speisegase zugeführt werden, um den Ladungstransport in der Membran zu gewährleisten. Ein Spektrum eines Gasgemisches, das Wasserstoff und Stickstoff in einem Verhältnis von 5:1 enthält und mit Wasserdampf gesättigt ist, ist in Figur 6 gezeigt. Figur 7 zeigt einen vergrößerten Ausschnitt des Spektrums von Figur 6 in dem Bereich von 250 bis ungefähr 400 nm. Bei den gewählten Bedingungen zeigt das Spektrum ein ausgeprägtes Wassersignal bei ungefähr 310 nm (Kurve A), wie dies gut in Fig. 7 zu sehen ist. Dies belegt, dass bei gleichzeitiger Anwesenheit von Wasserdampf die Detektion von Wasserstoff (Kurve B) und Stickstoff (Kurve C) möglich ist. Dies ist auch in der Figur 6 zu erkennen, wo ein Spektrum von mit Wasserdampf gesättigtem Wasserstoff und eines des mit Wasserdampf gesättigten Wasserstoff/Stickstoff (5:1)-Gemisches übereinander gelegt sind.

## Patentansprüche

1. Verfahren zum Überwachen und/oder Regeln von Brennstoffzellen, umfassend das Ermitteln der Zusammensetzung der Betriebsgase von Brennstoffzellen, umfassend die Schritte:
- Einleiten eines zu analysierenden Gasgemisches in eine Messzelle (1);
- Erzeugen eines Lichtbogens in der Messzelle (1);
- Aufnehmen der durch den Lichtbogen emittierten Strahlung;
- Optisches Filtern der emittierten Strahlung und/oder spektrales Zerlegen der emittierten Strahlung;
- Umwandeln der emittierten Strahlung in ein elektrisches Signal;
- Auswerten des elektrischen Signals.

2. Verfahren nach Anspruch 1, **dadurch gekennzeichnet, dass** der Lichtbogen durch das Anlegen einer Wechselspannung an Elektroden (6, 7) erzeugt wird.

3. Verfahren nach Anspruch 2, **dadurch gekennzeichnet, dass** die Wechselspannung bei einer Frequenz zwischen 20 kHz und 70 kHz liegt.

4. Verfahren nach einem der Ansprüche 2 oder 3, **dadurch gekennzeichnet, dass** an die Elektroden (6, 7) eine Spannung in einem Bereich zwischen 0,5 kV und 5 kV angelegt wird, so dass sich Stromstärken in einem Bereich zwischen 200 µA bis 6 mA einstellen.

5. Verfahren nach einem der Ansprüche 1 bis 4, **dadurch gekennzeichnet, dass** die emittierte Strahlung mit einem Lichtleiter (12) abgenommen wird.

6. Verfahren nach einem der Ansprüche 1 bis 5, **dadurch gekennzeichnet, dass** die emittierte Strahlung von wenigstens zwei Messzellen (1) abgenommen wird, wobei das optische Filtern der emittierten Strahlung und/oder das spektrale Zerlegen der emittierten Strahlung für jede der Messzellen (1) einzeln durchgeführt wird.

7. Verfahren einem der Ansprüche 1 bis 5, **dadurch gekennzeichnet, dass** die emittierte Strahlung von wenigstens zwei Messzellen (1) abgenommen wird, wobei das optische Filtern der emittierten Strahlung und/oder das spektrale Zerlegen der emittierten Strahlung für jede der Messzellen (1) parallel durchgeführt wird.

8. Brennstoffzellensystem, aufweisend eine Messzelle (1) zur Analyse der Zusammensetzung der Betriebsgase von Brennstoffzellen, umfassend ein Gehäuse (2), das einen Gaseintritt (4) und einen Gasaustritt (5) aufweist, und eine Entladungskammer (3), die mit dem Gaseintritt (4) und Gasaustritt (5) verbunden ist, wobei die Entladungskammer (3), von dem Gehäuse (2) zumindest teilweise umschlossen ist und in der eine Elektrode (6) und eine Gegenelektrode (7) mit einer Entladungsstrecke angeordnet sind, wobei die Elektroden (6, 7) zur Ausbildung eines Lichtbogens ausgebildet sind und mindestens ein Mittel vorgesehen ist, um die emittierte Strahlung abzunehmen.

9. Brennstoffzellensystem nach Anspruch 8, **dadurch gekennzeichnet, dass** die Elektrode (6) und die Gegenelektrode (7) stiftförmig mit verdickten Enden ausgebildet sind.

10. Brennstoffzellensystem nach Anspruch 8, **dadurch gekennzeichnet, dass** eine Elektrode (6) als Ringelektrode ausgebildet ist.

11. Brennstoffzellensystem nach einem der Ansprüche 8 bis 10, **dadurch gekennzeichnet, dass** das Gehäuse (2) thermostatisierbar ausgebildet ist.

12. Brennstoffzellensystem nach einem der Ansprüche 8 bis 11, **dadurch gekennzeichnet, dass** das Mittel, um die emittierte Strahlung abzunehmen, als Lichtleiter (12) ausgebildet ist.

13. Verwendung einer Messzelle (1) umfassend ein Gehäuse (2), das einen Gaseintritt (4) und einen Gasaustritt (5) aufweist, und eine Entladungskammer (3), die mit dem Gaseintritt (4) und Gasaustritt (5) verbunden ist, wobei die Entladungskammer (3), von dem Gehäuse (2) zumindest teilweise umschlossen ist und in der eine Elektrode (6) und eine Gegenelektrode (7) mit einer Entladungsstrecke angeordnet sind, wobei die Elektroden (6, 7) zur Ausbildung eines Lichtbogens ausgebildet sind und mindestens ein Mittel vorgesehen ist, um die emittierte Strahlung abzunehmen, zur Analyse der Zusammensetzung der Betriebsgase von Brennstoffzellen.

## Claims

1. Method for monitoring and/or controlling fuel cells, comprising the determination of the composition of the operating gases of fuel cells, comprising the steps of:
- introducing a gas mixture to be analysed into a measuring cell (1);
- producing a light arc in the measuring cell (1);
- tapping the radiation emitted by the light arc;
- optically filtering the emitted radiation and/or spectrally splitting the emitted radiation;
- converting the emitted radiation into an electrical signal;
- evaluating the electrical signal.

2. Method according to Claim 1, **characterized in that** the light arc is produced by applying an AC voltage to electrodes (6, 7).

3. Method according to Claim 2, **characterized in that** the AC voltage lies at a frequency between 20 kHz and 70 kHz.

4. Method according to either of Claims 2 and 3, **characterized in that** a voltage in a range between 0.5 kV and 5 kV is applied to the electrodes (6, 7) such that currents in a range of between 200 µA to 6 mA are set.

5. Method according to one of Claims 1 to 4, **characterized in that** the emitted radiation is tapped using an optical waveguide (12).

6. Method according to one of Claims 1 to 5, **characterized in that** the emitted radiation is tapped from at least two measuring cells (1), the optical filtering of the emitted radiation and/or the spectral splitting of the emitted radiation being carried out individually for each one of the measuring cells (1).

7. Method according to one of Claims 1 to 5, **characterized in that** the emitted radiation is tapped from at least two measuring cells (1), the optical filtering of the emitted radiation and/or the spectral splitting of the emitted radiation being carried out in parallel for each one of the measuring cells (1).

8. Fuel cell system, comprising a measuring cell (1) for analysing the composition of the operating gases of fuel cells, comprising a housing (2) which has a gas inlet (4) and a gas outlet (5), and a discharge chamber (3) which is connected to the gas inlet (4) and the gas outlet (5), the discharge chamber (3) being at least partly enclosed by the housing (2) and with an electrode (6) and a counter electrode (7) with a discharge path being arranged therein, the electrodes (6, 7) being embodied for the formation of a light arc and provision being made of at least one means for tapping the emitted radiation.

9. Fuel cell system according to Claim 8, **characterized in that** the electrode (6) and the counter electrode (7) are embodied in a pin-shaped manner with thickened ends.

10. Fuel cell system according to Claim 8, **characterized in that** one electrode (6) is embodied as a ring electrode.

11. Fuel cell system according to one of Claims 8 to 10, **characterized in that** the housing (2) is embodied in a temperature-controllable manner.

12. Fuel cell system according to one of Claims 8 to 11, **characterized in that** the means for tapping the emitted radiation is embodied as an optical waveguide (12).

13. Use of a measuring cell (1) comprising a housing (2) which has a gas inlet (4) and a gas outlet (5), and a discharge chamber (3) which is connected to the gas inlet (4) and the gas outlet (5), the discharge chamber (3) being at least partly enclosed by the housing (2) and with an electrode (6) and a counter electrode (7) with a discharge path being arranged therein, the electrodes (6, 7) being embodied for the formation of a light arc and provision being made of at least one means for tapping the emitted radiation, for analysing the composition of the operating gases of fuel cells.

## Revendications

1. Procédé de surveillance et/ou de commande de piles à combustible, consistant à déterminer la composition des gaz de fonctionnement des piles à combustible, comprenant les étapes consistant à ;
- introduire un mélange gazeux à analyser dans une pile de mesure (1) ;
- générer un arc électrique dans la pile de mesure (1) ;
- acquérir le rayonnement émis par l'arc électrique ;
- filtrer optiquement le rayonnement émis et/ou décomposer spectralement le rayonnement émis ;
- convertir le rayonnement émis en un signal électrique ;
- analyser le signal électrique.

2. Procédé selon la revendication 1, **caractérisé en ce que** l'arc électrique est généré par application d'une tension alternative à des électrodes (6, 7).

3. Procédé selon la revendication 2, **caractérisé en ce que** la tension alternative se situe à une fréquence comprise entre 20 kHz et 70 kHz.

4. Procédé selon l'une quelconque des revendications 2 ou 3, **caractérisé en ce qu'**une tension se situant dans l'intervalle compris entre 0,5 kV et 5 kV est appliquée aux électrodes (6, 7) de manière à régler des intensités de courant se situant dans l'intervalle compris entre 200 µA et 6 mA.

5. Procédé selon l'une quelconque des revendications 1 à 4, **caractérisé en ce que** le rayonnement émis est acquis à l'aide d'un guide optique (12).

6. Procédé selon l'une quelconque des revendications 1 à 5, **caractérisé en ce que** le rayonnement émis est acquis par au moins deux piles de mesure (1), dans lequel le filtrage optique du rayonnement émis et/ou la décomposition spectrale du rayonnement émis est effectuée individuellement pour chacune des piles de mesure (1).

7. Procédé selon l'une quelconque des revendications 1 à 5, **caractérisé en ce que** le rayonnement émis est acquis par au moins deux piles de mesure (1), dans lequel le filtrage optique du rayonnement émis et/ou la décomposition spectrale du rayonnement émis est effectuée en parallèle pour chacune des piles de mesure (1).

8. Système de pile à combustible, comportant une pile de mesure (1) destinée à analyser la composition des gaz de fonctionnement des piles à combustible, comprenant un boîtier (2) qui comporte une entrée de gaz (4) et une sortie de gaz (5), et une chambre de décharge (3) reliée à l'entrée de gaz (4) et à la sortie de gaz (5), dans lequel la chambre de décharge (3) est entourée au moins partiellement par le boîtier (2) et une électrode (6) et une contre-électrode (7) ayant une zone de décharge sont disposées dans celle-ci, dans lequel les électrodes (6, 7) sont réalisées de manière à former un arc électrique et en ce qu'il est prévu au moins un moyen destiné à acquérir le rayonnement émis.

9. Système de pile à combustible selon la revendication 8, **caractérisé en ce que** l'électrode (6) et la contre-électrode (7) sont réalisées sous la forme de broches ayant des extrémités épaissies.

10. Système de pile à combustible selon la revendication 8, **caractérisé en ce qu'**une électrode (6) est réalisée sous la forme d'une électrode annulaire.

11. Système de pile à combustible selon l'une quelconque des revendications 8 à 10, **caractérisé en ce que** le boîtier (2) est réalisé de manière à pouvoir être thermostaté.

12. Système de pile à combustible selon l'une quelconque des revendications 8 à 11, **caractérisé en ce que** le moyen destiné à acquérir le rayonnement émis est réalisé sous la forme d'un guide optique (12).

13. Utilisation d'une cellule de mesure (1) comprenant un boîtier (2) comportant une entrée de gaz (4) et une sortie de gaz (5), et une chambre de décharge (3) reliée à l'entrée de gaz (4) et à la sortie de gaz (5), dans lequel la chambre de décharge (3) est au moins partiellement entourée par le boîtier (2) et une électrode (6) et une contre-électrode (7) ayant une zone de décharge sont disposées dans celle-ci, dans lequel les électrodes (6, 7) sont réalisées de manière à former un arc électrique et dans lequel il est prévu un moyen permettant d'acquérir le rayonnement émis afin d'analyser la composition des gaz de fonctionnement des piles à combustible.
